# EUROPÄISCHE PATENTSCHRIFT

(11) **EP 0 419 606 B1**
(45) Veröffentlichungstag und Bekanntmachung des Hinweises auf die Patenterteilung: **03.08.1994**
(21) Anmeldenummer: 90903754.1
(22) Anmeldetag: 14.03.1990
(51) Int. Cl.: F25B 33/00, F25B 15/10

(54) **AUSTREIBER MIT EINER GASBLASENPUMPE**
EXPELLER WITH A GAS-BUBBLE PUMP
PURGEUR AVEC POMPE A BULLES DE GAZ

(30) Priorität: 14.03.1989 CH 930/89
(43) Veröffentlichungstag der Anmeldung: 03.04.1991
(73) Patentinhaber: STIERLIN, Hans, CH-8952 Schlieren (CH)
(72) Erfinder: STIERLIN, Hans, CH-8952 Schlieren (CH)
(74) Vertreter: Blum, Rudolf Emil Ernst
(86) Internationale Anmeldenummer: CH9000066
(87) Internationale Veröffentlichungsnummer: WO9010834

(56) Entgegenhaltungen:
- DE-A- 3 521 274
- DE-C- 2 950 327
- US-A- 2 363 771
- US-A- 3 225 560

## Beschreibung

Die vorliegende Erfindung betrifft einen Austreiber für eine Diffusionsabsorptionsanlage gemäss dem Oberbegriff des ersten Patentanspruches.

Diffusionsabsorptionsanlagen, also Absorptionsanlagen mit einem druckausgleichenden Hilfsgas, sind als Kleinkälteanlagen zur Verwendung in Haushaltkühlschränken seit langem bekannt. Diese Absorptionskälteaggregate wurden bezüglich ihres Wirkungsgrades entscheidend verbessert, ein solches Aggregat ist z.B. im Schweizer Patent Nr. 475 527 ausführlich beschrieben. Die Verbesserung des Wirkungsgrades wurde im wesentlichen durch den dort gezeigten Austreiber erreicht. Wird der Austreiber mit einer Gasblasenpumpe versehen, wie das auch bei der Anlage des genannten Patentes der Fall ist, so erübrigen sich bewegte Teile, wie etwa motorisch angetriebene Lösungsmittelpumpen. Die in Haushahltkühlschränken verwandten Diffusionsabsorptionsanlagen weisen jedoch eine relativ geringe Leistung auf. Für grosse Anlagen, z.B. zur Klimatisierung oder zur Verwendung als Wärmepumpen in Heizanlagen sind sie deshalb nicht geeignet.

In US-2 363 771 wird eine Diffusionsabsorptionsanlage kleiner Leistung gezeigt, wo ein Pumprohr von zwei Flammrohren beheizt wird. Hier wird aber die Wärme der Flammrohre nicht optimal genutzt. Ausserdem führt eine Verstopfung im Pumprohr zum Ausfall der ganzen Anlage.

In Diffusionsabsorptionsanlagen grosser Leistung muss dem Austreiber auch eine grosse Wärmemenge zugeführt werden können. Die Gasblasenpumpe muss so ausgebildet sein, dass sie die Flüssigkeit auf eine erhebliche Höhe pumpen kann, um dem Lösungsmittelumsatz die nötige Antriebskraft zu verleihen. Der Versuch, die in Haushaltskühlschränken verwandten Austreiber mit Gasblasenpumpen für Diffusionsabsorptionsanlagen grosser Leistung einfach zu vergrössern muss scheitern, weil das Pumpenrohr der Dampfblasenpumpe einen gewissen Durchmesser nicht überschreiten darf, da sonst der Schlupf zwischen den Dampfblasen und der zu fördernden Flüssigkeit zu gross wird und nur ganz geringe Pumphöhen erreicht werden. Zudem ist zu beachten, dass die Dampfblasenpumpe nicht nur im Betriebszustand funktionsfähig ist, sondern auch den sehr kritischen Startvorgang bei der Inbetriebsetzung bewältigt.

Ziel der vorliegenden Erfindung ist deshalb, einen Austreiber mit Gasblasenpumpe zur Verwendung in Diffusionsabsorptionsanlagen grosser Leistung zu zeigen.

Diese Aufgabe wird bei einem Austreiber der eingangs erwähnten Gattung durch die im ersten Patentanspruch genannten Merkmale gelöst.

Im folgenden wird ein Ausführungsbeispiel der Erfindung anhand der Zeichnungen erläutert. Es zeigen:
Figur 1 eine schematische Darstellung einer Diffusionsabsorptionsanlage grosser Leistung mit einem Austreiber und Gasblasenpumpe gemäss dieser Erfindung.
Figur 2 einen Längsschnitt des Austreibers mit Gasblasenpumpe.
Figur 3 einen Querschnitt im oberen,
Figur 4 im mittleren und
Figur 5 im unteren Bereich des Austreibers mit Gasblasenpumpe.

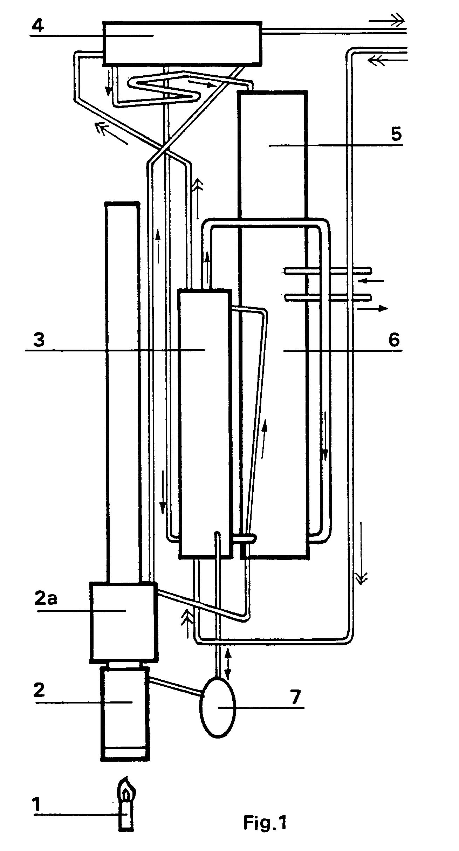

In Figur 1 ist das Schema einer Diffusionsabsorptionsanlage grosser Leistung dargestellt. Ein derartiges Aggregat umfasst einen Gasbrenner 1 oder eine andere Wärmequelle, einen Austreiber mit Gasblasenpumpe 2 in welchem der Kältemitteldampf ausgetrieben wird. Dieser Dampf gelangt über einen Dreifach-Wärmetauscher 2a durch eine Dampfleitung in den Kondensator 4. Hier kondensiert der Kältemitteldampf und das Kondensat fliesst durch eine Kondensatleitung in einen Verdampfer 5, wo es unter Wärmeaufnahme verdampft. Das durch die Verdampfung reich gewordene Hilfsgas strömt in einen Gaswärmetauscher 6 und kühlt das dort einströmende arme Gas ab. Das reiche Gas strömt anschliessend in einen Absorber 3, wo ein Teil des Kältemitteldampfs durch die arme Lösung absorbiert wird. Die durch den Absorptionsvorgang reich gewordene Lösung gelangt über den Dreifach-Wärmetauscher 2a in den Austreiber 2. Das Kältemittel wird hier wie erwähnt ausgetrieben und die dadurch arm gewordene Lösung mittels der Gasblasenpumpe hochgepumpt und dadurch in die Lage versetzt, oben in den Absorber zu fliessen, wobei die arme Lösung zuvor ebenfalls durch den Dreifach-Wärmetauscher 2a geleitet wird. Der Absorber 3 und der Kondensator 4 werden durch das Medium eines Sekundärsystems durchflossen, das dort Wärme auf einem hohen Temperaturniveau aufnimmt. Der Verdampfer 5 wird durch ein Medium eines weiteren Sekundärsystems durchflossen, das ihm Wärme auf einem tiefen Temperaturniveau zuführt.

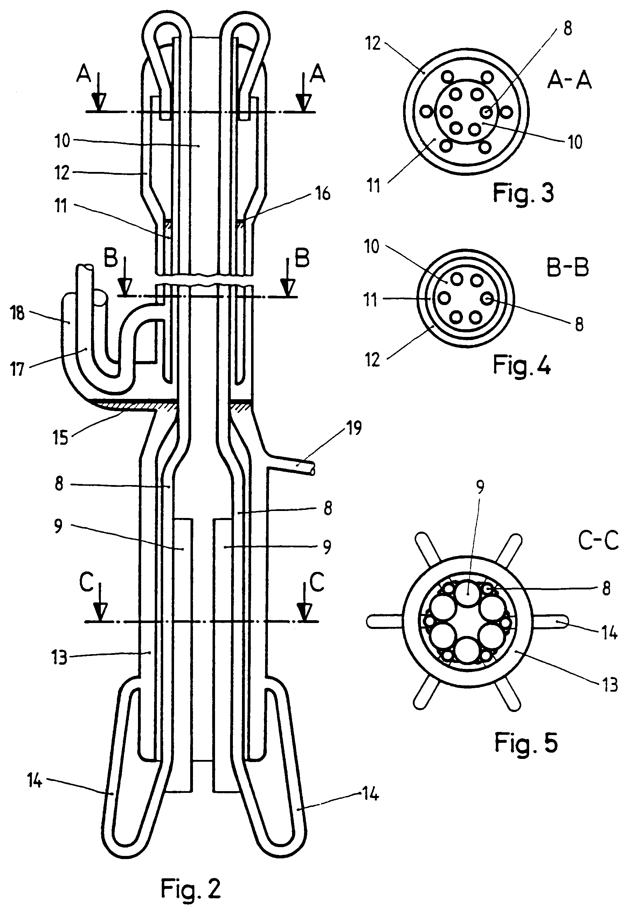

Im Ausführungsbeispiel des Austreibers mit Gasblasenpumpe sind sechs kreisförmig angeordnete Pumpenrohre 8 vorgesehen (Figuren 3 bis 5). Im unteren Bereich der Vorrichtung sind ebenfalls kreisförmig sechs Flammenrohre 9 angeordnet und zwar so, dass ein Flammenrohr je zwei Pumpenrohre 8 berührt (Figur 4). Die Flammenrohre 9 werden durch je einen Gasbrenner oder eine andere Heizvorrichtung beheizt. Die Pumpenrohre 8 sind jeweils auf zwei sich benachbarte Flammenrohre 9 aufgeschweisst. Die Vervendung mehrerer Pumpenrohre 8 erlaubt es, deren Durchmesser ausreichend klein zu gestalten, um die erforderliche Pumphöhe zu zu erreichen. Da die im Austreiber entstehenden Gasblasen vergleichsweise klein sind fördern sie beim Aufsteigen in Rohren mit grossem Durchmesser sehr wenig Flüssigkeit, da sie in der Flüssigkeitssäule lediglich aufsteigen und keine Flüssigkeit mitreissen. Um eine ausreichende Pumpleistung zu erzielen, müssen daher mehrere Pumpenrohre vorgesehen werden, jedoch führt das blosse parallelschalten herkömmlicher Dampfblasenpumpen nicht zu einer brauchbaren Lösung, was die Betriebssicherheit und den Wirkungsgrad betreffen. Die besondere Anordnung der Pumpenrohre 8, nämlich kreisförmig und alternierend zu den ebenfalls kreisförmig angeordneten Flammenrohren 9, führt zu einer losen thermischen Koppelung aller Pumpenrohre untereinander. Dies ist aber ausserordentlich vorteilhaft. Im normalen Betrieb erhalten alle Pumpenrohre ungefähr die gleiche Wärmemenge zugeführt, selbst wenn die Gasflammen in den Flammenrohren 9 etwas unterschiedliche Leistungen aufweisen. Es hat sich sogar gezeigt, dass selbst beim Ausfall einer oder mehrerer Gasflammen der Austreiber noch zuverlässig funktioniert, weil jedes der Pumpenrohre 8 von 2 Flammenrohren geheizt wird. Man kann daher einen Betrieb mit reduzierter Leistung so vorsehen, dass nur jedes zweite Flammenrohr beheizt wird. Diese Anordnung bringt aber auch Vorteile beim Auftreten eines befürchteten Störfalls, dem Verstopfen eines Pumpenrohrs nämlich. Die hier getroffene Anordnung verhindert in dieser Situation eine Ueberhitzung, da durch die lose thermische Koppelung ausreichend Wärme abgeführt werden kann, indem sie den intakten Pumpenrohren zugeleitet wird. Wie aus der Figur 2 ersichtlich ist, münden die Flammenrohre 9 in einen Kamin 10, die Pumpenrohre 8 verlaufen innerhalb dieses Kamins 10, so dass die heissen Abgase Wärme an die Pumpenrohre abgeben können. Dies führt zu einer ausserordentlich geringen Austrittstemperatur der Abgase und verbessert den Wirkungsgrad entscheidend.

Die durch die Pumprohre 8 hochgepumpte arme Lösung fliesst schliesslich in den Flüssigkeitsraum 11. Im Betriebszustand weist die arme Lösung darin ein Niveau 16 auf. Der ausgetriebene Kältemitteldampf gelangt in den Dampfraum 12. Der Dampf und die arme Flüssigkeit werden in ihren Räumen nach unten geführt und hernach die Flüssigkeit durch ein inneres Rohr 17 und der Dampf durch ein äusseres Rohr 18 in den Dreifachwärmetauscher 2a (Fig.1) geleitet. Der Dampf gelangt schliesslich in den Kondensator und die arme Flüssigkeit in den oberen Einlass des Absorbers 3. Die reiche Flüssigkeit aus dem Absorber 3 wird ebenfalls durch den Dreifachwärmetauscher 2a geführt und gelangt schliesslich durch das äussere Rohr 18 in den Ansaugraum 13 des Austreibers . Sechs Rohrbogen 14 leiten schliesslich die reiche Flüssigkeit vom Ansaugraum 13 in die Pumpenrohre 8. Im Betriebszustand weist die reiche Flüssigkeit im Ansaugeraum 13 ein Niveau 15 auf. Ein Ausgleichsrohr 19 führt zu einem Reservoir, das dieses Niveau gewährleistet. Der erwähnte Dreifachwärmetauscher ist im CH-Patent 475 527, insbesondere im Zusammenhang mit der dort dargestellten Figur 9 ausführlich beschrieben.

Mit der am Ausführungsbeispiel dargelegten Vorrichtung ist es möglich, Rumphöhen von weit über einem Meter zu erreichen unter Aufrechterhaltung der besten bei Diffusionsabsorptionsanlagen je erreichten Wirkungsgraden und einer hoher Betriebssicherheit. Dadurch wurde ein entscheidendes Element zur Herstellung von Diffusionsabsorptionsanlagen grosser Leistung geschaffen.

## Patentansprüche

1. Austreiber für eine Diffusionsabsorptionsanlage, mit einer Gasblasenpumpe (2) mit von Flammrohren (9) beheizten Pumpenrohren (8), dadurch gekennzeichnet, dass drei oder mehr Pumpenrohre (8) auf einem Kreis angeordnet sind und eine gleiche Anzahl Flammrohre (9) alternierend mit den Pumpenrohren (8) ebenfalls auf einem Kreis derart angeordnet sind, dass jedes Pumpenrohr (8) von zwei Flammrohren (9) beheizt wird und jedes Flammrohr (9) zwei Pumpenrohre (8) beheizt.

2. Austreiber mit Gasblasenpumpe nach Anspruch 1, dadurch gekennzeichnet, dass die Pumpenrohre (8) an den Berührungsstellen mit den Flammrohren (9) an diese angeschweisst sind.

3. Austreiber mit Gasblasenpumpe nach Anspruch 1 oder 2, dadurch gekennzeichnet, dass ein Abgaskamin (10) vorgesehen ist, in dessen Innern die Pumpenrohre verlaufen.

## Claims

1. Expeller for a diffusion absorption plant with a gas bubble pump (2) with pump tubes (8) heated by flame tubes (9), characterised in that three or more pump tubes (8) are arranged on a circle and a same number of flame tubes (9) are also arranged on a circle alternatingly with the pump tubes (8) such that each pump tube (8) is heated by two flame tubes (9) and each flame tube (9) is heating two pump tubes (8).

2. The expeller with a gas-bubble pump according to claim 1, characterised in that the pump tubes (8) are welded to the flame tubes (9) at the locations of contact.

3. The expeller with a gas-bubble pump according to claim 1 or 2, characterised in that an exhaust flue (10) is provided, within which the pump tubes extend.

## Revendications

1. Extracteur pour une installation à diffusion-absorption comprenant une pompe (2) à bulles de gaz comportant des tubes de pompe (8) chauffés par des tubes de flammes (9), caractérisé en ce que trois ou plus de trois tubes de pompe (8) sont disposés sur un cercle et qu'un nombre égal de tubes de flammes (9) sont disposés également sur un cercle, en alternance avec les tubes de pompe (8), de telle manière que chaque tube de pompe (8) soit chauffé par deux tubes de flammes (9) et que chaque tube de flammes (9) chauffe deux tubes de pompe (8).

2. Extracteur à pompe à bulles de gaz selon la revendication 1, caractérisé en ce que les tubes de pompe (8) sont soudés aux tubes de flammes (9) à leurs points de contact avec ces derniers.

3. Extracteur à pompe à bulles de gaz selon la revendication 1 ou 2, caractérisé en ce qu'il est prévu une cheminée (10) de gaz de fumées dans le volume intérieur de laquelle passent les tubes de pompe.
